# EUROPEAN PATENT APPLICATION

(11) **EP 4 632 469 A1**
(43) Date of publication of application: **15.10.2025**
(21) Application number: 25165822.5
(22) Date of filing: 25.03.2025
(51) Int. Cl.: G02B 30/28, G02B 27/00, G02B 27/01

(54) **LIGHT FIELD DISPLAY BASED ON RELATIVE LOCATION OF VIEWER**

(30) Priority: 09.04.2024 US 202418630144
(71) Applicant: Distance Technologies Oy, 00530 Helsinki (FI)
(72) Inventor: Konttori, Urho, 00260 Helsinki (FI); Itäranta, Joonas, 04320 Tuusula (FI); Strandborg, Mikko, 10940 Hangonkylä (FI)
(74) Representative: Moosedog Oy

(57) **Abstract**

Tracking means (104) are utilised to determine a relative location of a first eye (124a, 202a, 312a, 416a, 422a, 504, 806a) and of a second eye (124b, 202b, 312b, 416b, 422b, 504, 806b) of user(s) (126) with respect to an optical combiner (108). An input (502) for a light field display unit (106, 302, 400, 804) is generated, based on the relative location of the first eye and of the second eye. The input is employed at the light field display unit to produce a synthetic light field (130), wherein the optical combiner is employed to reflect a first part and a second part of the synthetic light field towards the first eye and the second eye, respectively, whilst optically combining the first part and the second part of the synthetic light field with a real-world light field (112) of a real-world environment (102).

## Description

### TECHNICAL FIELD

The present disclosure relates to systems incorporating light field displays based on relative locations of viewers. The present disclosure also relates to methods incorporating light field displays based on relative locations of viewers.

### BACKGROUND

Head-up displays (HUDs) have a long-standing history, particularly, in sectors such as automotive sectors, aviation sectors, defence sectors, and the like. Such HUDs are typically designed for a narrow field of view and a single focus plane. Some existing display technology, for example, in aviation and defence applications, involves incorporation of a separate optical combiner that is arranged in proximity of a viewer, due to limitations in sizes of waveguides and projection optics, to create large projection surfaces for viewing purposes. However, this approach is not suitable to be employed for automotive applications, where the incorporation of the separate optical combiner is unfeasible due to space constraints within automobiles.

In order to mitigate this problem, an alternative approach is to introduce a display that reflects a visual scene through a windshield of a vehicle towards a user present in the vehicle. This creates a virtual image at a distance equivalent to a sum of a viewer-to-windshield distance and a windshield-to-display distance. While the aforesaid alternative approach is effective for demonstration purposes, it falls short in a practical application due to a significant disparity in a focus distance between the virtual image and an actual real-world environment behind said virtual image. Similarly, utilizing stereoscopic displays with additional glasses (such as shutter glasses, polarized glasses, or the like) often introduce obstructions within a field of view of the user, which detract the user's view of the real-world environment. Furthermore, the HUDs are typically designed for single-user scenarios, primarily due to their limited fields of view, and consequently, have small eye boxes.

Moreover, waveguides have been employed in aviation since the 2000s to create a distinct optical combiner enabling users within aircrafts to view images at infinity. However, an image quality of the images generated using such set-up is compromised, and a size of waveguide optics is also constrained to small sizes due to manufacturing complexities. While this set-up is suitable for very short distances (for example, such as smaller than 50 cm) between the viewer and the optical combiner, said setup is impractical for the automotive applications, where a windshield is almost 100 cm away from the viewer.

Furthermore, projector-based approaches, including direct retina projection or reflection through multiple mirrors to the windshield, are also available. However, such approaches necessitate a larger space for projection optics within the vehicle, thereby resulting in a narrow field of view. Similarly, utilizing two projectors with a narrow field of view to generate separate images for each eye of the user, while offering independent focus control, presents challenges due to its limited eye box, making real-world application cumbersome.

Therefore, in light of the foregoing discussion, there exists a need to overcome the aforementioned drawbacks.

### SUMMARY

The present disclosure seeks to provide a system and a method to produce a realistic and high-quality synthetic light field augmenting a real-world light field for one or more users, in a computationally-efficient and time-efficient manner. The aim of the present disclosure is achieved by a system and a method which incorporate a light field display based on a relative location of a viewer, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates an example implementation of a system incorporating light field display based on a relative location of a viewer, in accordance with an embodiment of the present disclosure;
FIG. 2 illustrates an exemplary scenario of how a first eye and a second eye of a user view a virtual object and a real-world object, in accordance with an embodiment of the present disclosure;
FIGs. 3A and 3B illustrate two different exemplary implementations of a multiscopic optical element, in accordance with different embodiments of the present disclosure;
FIG. 4A illustrates an example scenario of how a light-emitting component of a light field display unit produces a synthetic light field for different viewers, while FIG. 4B illustrates example positions of pixels within the light-emitting component of the light field display unit from a perspective of a viewer, in accordance with an embodiment of the present disclosure;
FIG. 5A illustrates an exemplary three-dimensional (3D) model of a virtual environment, while FIG. 5B illustrates an input that is generated based on a relative location of a given eye of a user with respect to an optical combiner, in accordance with an embodiment of the present disclosure;
FIG. 6A illustrates a viewing frustum of a virtual camera utilised for generating a projection matrix corresponding to a given eye of a first user, FIG. 6B illustrates a viewing frustum of a given virtual camera utilised for generating a projection matrix corresponding to a given eye of a second user, while FIG. 6C illustrates a top view of said viewing frustum of the given virtual camera corresponding to the given eye of the second user, in accordance with an embodiment of the present disclosure;
FIG. 7 illustrates steps of a method incorporating light field display based on a relative location of a viewer, in accordance with an embodiment of the present disclosure; and
FIGs. 8A and 8B illustrate two different exemplary scenarios of how a disparity between a given pixel of a first set and a given pixel of a second set varies with respect to an optical depth at which a given synthetic 3D point is to be displayed, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
tracking means;
a light field display unit;
an optical combiner arranged on an optical path of the light field display unit and on an optical path of a real-world light field of a real-world environment; and
at least one processor configured to:
   utilise the tracking means to determine a relative location of a first eye and of a second eye of at least one user with respect to the optical combiner;
   generate an input to be employed by the light field display unit for producing a synthetic light field, based on the relative location of the first eye and of the second eye of the at least one user with respect to the optical combiner; and
   employ the input at the light field display unit to produce the synthetic light field presenting virtual content, wherein the optical combiner is employed to reflect a first part and a second part of the synthetic light field towards the first eye and the second eye of the at least one user, respectively, whilst optically combining the first part and the second part of the synthetic light field with the real-world light field.

In a second aspect, an embodiment of the present disclosure provides a method comprising:
utilising tracking means to determine a relative location of a first eye and of a second eye of at least one user with respect to an optical combiner, wherein the optical combiner is arranged on an optical path of a light field display unit and on an optical path of a real-world light field of a real-world environment;
generating an input to be employed by the light field display unit for producing a synthetic light field, based on the relative location of the first eye and of the second eye of the at least one user with respect to the optical combiner; and
employing the input at the light field display unit to produce the synthetic light field presenting virtual content, wherein the optical combiner is employed to reflect a first part and a second part of the synthetic light field towards the first eye and the second eye of the at least one user, respectively, whilst optically combining the first part and the second part of the synthetic light field with the real-world light field.

The present disclosure provides the aforementioned system and the aforementioned method incorporating light field display based on relative locations of viewers in a computationally-efficient and time-efficient manner, to produce a realistic and high-quality synthetic light field that augments the real-world light field viewed by these viewers. In this regard, the first part and the second part of the synthetic light field present respective virtual images (augmenting respective real-world images) to the first eye and the second eye of the at least one user. Herein, the input is generated based on the relative location of the first eye and of the second eye of the at least one user, unlike in the prior art where the input is generated for several different locations, irrespective of whether or not any user is present at those locations. Thus, for a given native resolution of the light field display unit, an effective resolution of the respective virtual images presented to the first eye and the second eye of the at least one user is considerably higher, as compared to the prior art where an effective resolution of a virtual image presented per eye is drastically reduced. Moreover, in implementations where the input is in a form of a light field image, as the input is generated based on the known locations of the user's eyes only, it means that an extremely large number of pixels is not required to present the virtual images at a given resolution (for example, such as 60 pixels per degree). This may potentially reduce a size of the input to be employed. Furthermore, upon said reflection of the first part and the second part of the synthetic light field from the optical combiner, visual information corresponding to a first part of the input and a second part of the input is perceived by the first eye and the second eye, respectively, as a first virtual image and a second virtual image. Beneficially, this enables the user to perceive depth in the virtual content being presented through these virtual images.

Moreover, the system and the method are susceptible to produce a large field of view in comparison to the prior art, as the light field display unit can be implemented as a flat component that can be installed easily even when there is a space constraint. The system and the method can be easily employed in various different spaces, for example, such as inside vehicles, rooms with windows, and the like. The system and the method are robust, fast, reliable, support real-time simultaneous presentation of virtual images (via respective parts of the synthetic light field) to eyes of one or more users.

Throughout the present disclosure, the term *"tracking means"* refers to a specialised equipment for detecting and/or following a location of at least a first eye and a second eye of a given user. The first eye could be one of a left eye of the at least one user and a right eye of the at least one user, whereas the second eye could be another of the left eye and the right eye.

Optionally, the tracking means is implemented as at least one tracking camera. The at least one tracking camera may comprise at least one of: at least one visible-light camera, at least one infrared (IR) camera, at least one depth camera. Examples of the visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of the depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of cameras are utilised, the location of the user's eyes can be determined highly accurately, as results obtained from one type of image can be used to refine results obtained from another type of image. Herein, these different types of images constitute the tracking data collected by the tracking means, and may be in the form of at least one of: visible-light images, IR images, depth images.

It will be appreciated that the at least one tracking camera is arranged to face the at least one user, to facilitate tracking of the location of the user's eyes. Irrespective of where the at least one tracking camera is arranged, a relative location of the at least one tracking camera with respect to the optical combiner is fixed, and is pre-known to the at least one processor. This enables to determine the relative location of the first eye and of the second eye of the at least one user with respect to the optical combiner. Optionally, in this regard, when the tracking means are utilised to detect and/or follow the location of the first eye and of the second eye, a location of the first eye and of the second eye with respect to the at least one tracking camera is accurately known to the at least one processor, from tracking data collected by the tracking means. Thus, the at least one processor can easily and accurately determine the relative location of the first eye and of the second eye with respect to the optical combiner, based on the relative location of the at least one tracking camera with respect to the optical combiner and the location of the first eye and of the second eye with respect to the at least one tracking camera.

Optionally, the relative location of the first eye and of the second eye is represented in a given coordinate space. As an example, the given coordinate space may be a Cartesian coordinate space. It will be appreciated that the tracking means tracks both eyes of the at least one user with a significantly high accuracy and precision, such that an error in determining the relative location may, for example, be minimised to within a tolerance range of approximately (+/-) 8 millimetres.

It will be appreciated that the tracking means continuously tracks the location of at least the eyes of the given user throughout a given session of using the system. In such a case, the at least one processor is configured to repeatedly determine the relative location of the first eye and of the second eye with respect to the optical combiner (in real time or near-real time). Beneficially, this allows for presenting the at least one user with an augmented view of the synthetic light field with the real-world light field in an autostereoscopic manner. It is to be understood that when the synthetic light field is being produced for a plurality of users simultaneously, the at least one processor is configured to determine relative locations of both eyes of each user from amongst the plurality of users in a same manner as discussed hereinabove. Moreover, the relative location of the first eye and of the second eye is determined with respect to the optical combiner, because the synthetic light field (that is being produced by the light field display unit) would be presented to the at least one user via the optical combiner only.

Notably, the at least one processor controls an overall operation of the system. The at least one processor is communicably coupled to at least the tracking means and the light field display unit. Optionally, the at least one processor is implemented as a processor of the light field display unit. Alternatively, optionally, the at least one processor is implemented as a processor of a computing device that is communicably coupled to the light field display unit. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

Throughout the present disclosure, the term *"optical combiner"* refers to a specialised equipment that is capable of reflecting a corresponding part of the synthetic light field towards the given eye of the given user, whilst optically combining said part of the synthetic light field with the real-world light field. Optionally, the optical combiner is implemented by way of at least one of: a lens, a mirror, a semi-transparent mirror, a semi-transparent film, a semi-transparent flexible membrane, a prism, a beam splitter, an optical waveguide, a polarizer. Optical combiners are well-known in the art. It will be appreciated that when the at least one user comprises a plurality of users, some users from amongst the plurality of users may directly face the optical combiner (namely, in almost a straight manner), while remaining users may face the optical combiner in a diagonal manner (namely, obliquely or sideways). Optionally, a tilt angle of the optical combiner with respect to an image plane of the light field display unit lies in a range of 30 degrees and 60 degrees.

The input employed by the light field display unit can be in various different forms, depending on a type of the light field display unit that is implemented. As a first example, in case of a hogel-based light field display unit or a lenticular array based light field display unit or a parallax-barrier based light field display unit, the input can be in a form of a light field image comprising pixels. As a second example, in case of a hologram-projector based light field display unit, the input is in a form of a holographic recording having a holographic interference pattern. As a third example, in case of a scanning-laser based light field display unit, the input can be in a form of any one of: image data, vector graphics, vector paths. As a fourth example, in case of a cathode ray tube (CRT) - like light field display unit, the input is in a form of a video signal comprising analog electrical signals. All the aforementioned forms of light field display units and their corresponding inputs are well known in the art.

In case of a light field image, the input may be understood to be a two-dimensional (2D) image comprising a plurality of pixels, wherein a first part of the input comprises a first set of pixels from amongst the plurality of pixels that is responsible for generating the first part of the synthetic light field that corresponds to the first eye, and a second part of the input comprises a second set of pixels from amongst the plurality of pixels that is responsible for generating the second part of the synthetic light field that corresponds to the second eye. It will be appreciated that the pixels belonging to the first set are not arranged in a continuous manner across the light field image (namely, the input); similarly, the pixels belonging to the second set are also not arranged in a continuous manner across the light field image. Optionally, the pixels belonging to the first set and the pixels belonging to the second set may be arranged in alternating vertical stripes across a horizontal field of view of the light field image, wherein each vertical stripe comprises one or more scanlines of pixels. This is because humans perceive depth mainly based on horizontal binocular parallax. Thus, in this way, the light field image would be considerably different as compared to a conventional 2D image that is displayed via conventional 2D displays, because the (single) light field image would comprise visual information corresponding to the first eye as well as the second eye of the at least one user.

In some implementations, the virtual content presented by the synthetic light field corresponds to at least one virtual object. Optionally, in this regard, the at least one processor is configured to generate the input from a perspective of the relative location of the first eye and of the second eye of the at least one user, by employing a three-dimensional (3D) model of the at least one virtual object. The term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term *"three-dimensional model"* of the at least one virtual object refers to a data structure that comprises comprehensive information pertaining to the at least one virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model may be generated in the form of a 3D polygonal mesh, a 3D point cloud, a 3D surface cloud, a voxel-based model, or similar. Optionally, the 3D model is generated in the given coordinate space. Optionally, the at least one processor is configured to store the 3D model at a data repository that is communicably coupled to the at least one processor. The data repository may be implemented as a memory of the at least one processor, a cloud-based database, or similar.

Throughout the present disclosure, the term *"real-world light field"* refers to a light field emanating from the real-world environment in which the at least one user is present. Throughout the present disclosure, the term *"synthetic light field"* refers to a light field that is produced (namely, generated) synthetically by the light field display unit. It will be appreciated that in case of the real-world light field, light from, for example, a natural light source (such as the Sun) and/or an artificial light source (such as a lamp, a bulb, a tube-light, or similar), are reflected off real-world objects (or their portions) to be incident towards the first eye and the second eye of the at least one user. In this way, visual information (for example, such as colour information, optical depth information, and the like) pertaining to said real-world objects is typically perceived by the left eye and the right eye. On the other hand, in case of the synthetic light field, light emanating from the light field display unit, upon reflecting off the optical combiner, is incident on the first eye and the second eye of the at least one user. In this way, visual information pertaining to the at least one virtual object (namely, the virtual content) can be perceived by the first eye and the second eye.

It will be appreciated that each light field region (namely, a region of the synthetic light field) within a virtual scene can be accurately mapped to a corresponding position in the real-world environment at any optical depth, due to a capability to generate separate virtual images at varying angles for each eye of the at least one user (as will be discussed in more detail later). This phenomenon creates a perceptual illusion for humans that a given light field region exists at a correct distance, owing to the differential vergence between the given light field region and a corresponding light field region for the first eye and the second eye, respectively. In a monoscopic viewing arrangement, such as for a smartphone camera, the synthetic light field is displayed with a single-view perspective that accurately corresponds to the real-world environment (as will be discussed in more detail later). While convergence has been effectively addressed, a disparity persists in a focus between a real-world scene of the real-world environment and the virtual scene. This discrepancy, known as vergence-accommodation conflict (VAC), remains a challenge. The accommodation delta, ranging from infinity (0 dioptres) to 1 meter, amounts to 1 dioptre. The accommodation delta diminishes when producing light field regions of a virtual object that is positioned closer than an infinite distance. At such a reduced delta, the synthetic light field presents a comfortable viewing experience for objects situated at both infinity and closer distances, such as those within 2 meters of a vehicle when the system is implemented inside said vehicle.

It will also be appreciated that when the optical combiner reflects the first part and the second part of the synthetic light field towards the first eye and the second eye, respectively, it means that light produced by a first part of the input, generating the first part of the synthetic light field, is directed towards the first eye upon reflecting off the optical combiner. Simultaneously, light produced by a second part of the input, generating the second part of the synthetic light field, is directed towards the second eye upon reflecting off the optical combiner. Therefore, upon said reflection of the first part and the second part of the synthetic light field, visual information corresponding to the first part of the input and the second part of the input is perceived by the first eye and the second eye, respectively. It is to be understood that due to binocular disparity, visual information for the first eye and visual information for the second eye would be slightly offset from each other. Beneficially, this enables in perceiving depth, when the virtual content is presented to the at least one user using the synthetic light field. The binocular disparity is well-known in the art. Additionally, when the first part and the second part of the synthetic light field are optically combined with the real-world light field, the virtual content is perceived by the left eye and the right eye, along with the visual information pertaining to the real-world objects present in the real-world environment. Advantageously, this provides a result that is similar to displaying a combined view of a virtual image augmenting a real-world image to the at least one user. Information on how the synthetic light field is produced via the light field display unit will now be provided in more detail.

Throughout the present disclosure, the term *"light field display unit"* refers to a specialised equipment that is capable of producing the synthetic light field. In other words, the light field display unit is utilised to employ the input (generated by the at least one processor) to produce the synthetic light field at a given resolution. As mentioned earlier, different types of light field display units can be implemented. For example, the light field display unit can be any one of: a hogel-based light field display unit, a lenticular array based light field display unit, a parallax-barrier based light field display unit, a hologram-projector based light field display unit, a scanning-laser based light field display unit, a CRT-like light field display unit.

Optionally, the light field display unit comprises a multiscopic optical element, wherein the at least one processor is configured to control the multiscopic optical element, based on the relative location of the first eye and of the second eye of the at least one user with respect to the optical combiner, to direct light produced by a first part of the input and a second part of the input to generate the first part and the second part of the synthetic light field, respectively.

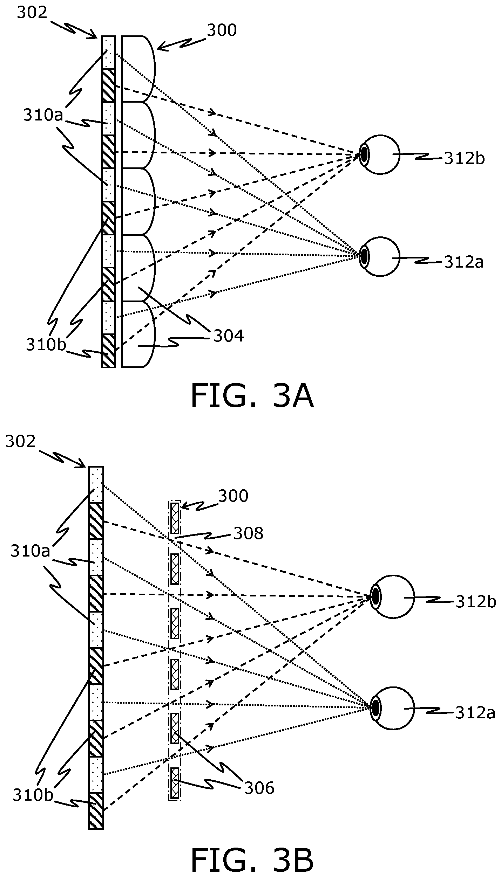

The term *"multiscopic optical element"* refers to a specialised optical element that is capable of directing light emanating from a light-emitting component of the light field display unit in different directions simultaneously. This allows the multiscopic optical element to present a multiscopic view to the at least one user without any need for her/him to wear 3D glasses. Depending on the type of the light field display unit, the light-emitting component may be implemented in various different forms, for example, such as a backlight, light-emitting diodes (LEDs), organic LEDs (OLEDs), micro LEDs, a laser, a spatial light modulator, among others. Optionally, the multiscopic optical element is implemented as any one of: a parallax barrier, a lenticular array, a switchable liquid crystal (LC) shutter array, a switchable LC barrier. The lenticular array could, for example, be a lenticular array of micromirrors, a lenticular array of microlenses, a lenticular array of microprisms, a lenticular sheet, or the like. In case of switchable lenticular array, LC lenses may be implemented as microlenses. In some implementations, the light field display unit is implemented as a liquid-crystal display (LCD) with a backlight. In such implementations, when the multiscopic optical element is implemented as the parallax barrier, the parallax barrier can be arranged over a light-emitting surface of the LCD, or between the light-emitting surface and the backlight. The term *"parallax barrier"* refers to a device that comprises an alternating arrangement of opaque portions and transparent portions. This has been illustrated in conjunction with FIG. 3B, for sake of better understanding and clarity. The parallax barrier is well-known in the art. The term *"lenticular array"* refers to an array of optical elements (such as lenses) that is designed in a manner that when viewed from slightly different angles/positions, different parts of an image underneath are displayed. Said array can be a regular array or an irregular array, and may also vary in a shape and/or a size. The lenticular array could also be made up of a liquid crystal optics layer. The lenticular array are well-known in the art. In an example, a cylindrical lens lenticular array may direct light produced by pixels lying on a given vertical stripe towards the first eye, while directing light produced by pixels lying on a neighbouring vertical stripe towards the second eye. This minimal implementation would sacrifice a half of a horizontal resolution to achieve per-eye rendering capability for two eyes of the at least one user. Typically, there are at least 1000 vertical stripes of pixels each for the left eye and the right eye; accordingly, in such a case, there are at least 1000 columns of microlenses in the lenticular array.

As an example, in case of a light field image and a lenticular array, a microlens arranged on an optical path of a group of neighbouring pixels can be controlled to direct light produced by these neighbouring pixels towards different direction(s). Optionally, when controlling the multiscopic optical element, the at least one processor is configured to generate a control signal to: direct the light produced by the first part of the input according to the relative location of the first eye and direct the light produced by the second part of the input according to the relative location of the second eye. As a result, the first part of the synthetic light field is reflected off the optical combiner to be incident upon the first eye, while the second part of the synthetic light field is reflected off the optical combiner to be incident upon the second eye. It will be appreciated that since the relative location of the first eye and of the second eye with respect to the optical combiner is readily known and accurately known to the at least one processor, the aforesaid control signal could be generated accordingly.

It will be appreciated that in a case where the at least one user comprises a plurality of user, the same input is employed by the light field display unit for producing the synthetic light field presenting the virtual content to the plurality of users simultaneously. In such a case, a resolution of the first part and the second part of the synthetic light field being displayed to a particular user depends on a number of users for which the input has been generated. For example, when the synthetic light field is to be produced for a single user, the first part of the synthetic light field may be generated by 50 percent of the input, and the second part of the synthetic light field may be generated by a remaining 50 percent of the input. In such a case, an effective resolution per eye would be a half of a native display resolution of the light field display unit. However, when the synthetic light field is to be produced for two users, for each of the two users, the first part of the synthetic light field may be generated by 25 percent of the input, and the second part of the synthetic light field may be generated by 25 percent of the input. In such a case, an effective resolution per eye would be one-fourth of the native display resolution of the light field display unit. In other words, greater the number of users, lower is the resolution of the first part and the second part of the synthetic light field being displayed to a single user, and vice versa.

In some instances where the multiscopic optical element is implemented as a lenticular array that is static, the light produced by the first part of the input and the second part of the input may always be directed in multiple directions simultaneously, even when only a single user is present. In such a case, an effective resolution per eye may not depend on the number of users. However, when the lenticular array is dynamic, a shape of the lenticular array could be controlled on-the-fly, to direct the light produced by the first part of the input and the second part of the input towards particular directions only (where users are actually present). In such a case, an effective resolution per eye may be controlled depending on the number of users.

Furthermore, optionally, the at least one processor is configured to utilise the tracking means to also determine a relative location of a camera lens of a camera with respect to the optical combiner,
wherein the input is generated further based on the relative location of the camera lens with respect to the optical combiner, and
wherein the optical combiner is employed to reflect a third part of the synthetic light field towards the camera lens of the camera, whilst optically combining the third part of the synthetic light field with the real-world light field.

In this regard, the tracking means is employed to also detect and/or follow a location of the camera lens of the camera. Thus, a location of the camera lens with respect to the tracking means is accurately known to the at least one processor, from the tracking data collected by the tracking means. In such a case, the at least one processor can easily and accurately determine the relative location of the camera lens with respect to the optical combiner, using the relative location of the at least one tracking camera with respect to the optical combiner and the location of the camera lens with respect to the at least one tracking camera. It will be appreciated that said camera could be a camera of a user device, or could be a camera arranged in the space in which the at least one user is present. The user device could, for example, be a smartphone, a laptop, a tablet, a phablet, or the like.

It will be appreciated that when the optical combiner reflects the third part of the synthetic light field towards the camera lens, it means that light produced by a third part of the input, generating the third part of the synthetic light field, is directed towards the camera lens upon reflecting off the optical combiner. Additionally, when the third part of the synthetic light field is optically combined with the real-world light field, the camera lens would receive light field constituting visual information corresponding to the third part of the input, along with receiving light field constituting the visual information pertaining to the real-world objects from the perspective of the location of the camera lens. In this regard, when the aforesaid light field would be detected at a photosensitive surface of an image sensor of the camera, a combined view of the third part of the synthetic light field augmenting the real-world light field would be captured.

Moreover, optionally, the optical combiner has a curved surface, wherein the input is generated further based on a curvature of the optical combiner. In this regard, when the at least one processor has a knowledge pertaining to the curvature of the optical combiner, any geometrical aberrations arising due to the curvature of the optical combiner could be easily corrected (namely, compensated) when generating the input. This is because the curvature of the optical combiner may potentially cause the light emanating from the light field display unit to reflect unevenly off the curved surface of the optical combiner. Such an uneven reflection of the light may result in the geometrical aberrations in the synthetic light field, which deteriorate an overall visual quality of the virtual content as the first part and the second part of the synthetic light field may not be reflected towards the first eye and the second eye in an accurate and intended manner. In order to mitigate this potential problem, the knowledge pertaining to the curvature of the optical combiner can be utilised by the at least one processor to generate the input accordingly. For example, the synthetic light field produced by the light field display unit may be pre-distorted prior to being incident on the curved surface of the optical combiner in a manner that the distorted synthetic light field would compensate for anticipated geometrical aberrations upon reflecting off said curved surface. In this way, the first part and the second part of the synthetic light field would be reflected towards the first eye and the second eye in a highly accurate manner, even though the optical combiner has the curved surface. It will be appreciated that the aforesaid pre-distortion could be determined by the at least one processor, based on the information pertaining to the curvature of the optical combiner, for example, including at least one of: a curvature profile of the optical combiner, a mathematical model describing the curvature of the optical combiner, previously-collected calibration data. In an example implementation, when a windshield of a vehicle (in which the at least one user is present) is utilised as the optical combiner, the optical combiner would have the curved surface. The geometrical aberrations could, for example, be spherical aberrations, distortions (such as barrel distortions, pincushion distortions, and the like), and the like.

Furthermore, optionally, the input is in a form of a light field image, wherein a first part of the input and a second part of the input comprise a first set of pixels and a second set of pixels corresponding to the first eye and the second eye of the at least one user, respectively, wherein when generating the input, the at least one processor is configured to determine, within the light field image, a position of a given pixel of the first set and a position of a given pixel of the second set that correspond to a given synthetic three-dimensional (3D) point, based on an interpupillary distance between the first eye and the second eye of the at least one user and an optical depth at which the given synthetic 3D point is to be displayed.

In this regard, since the first part of the input are utilised to generate the first part of the synthetic light field that is reflected towards the first eye, it can be understood that the first part of the input correspond to the first eye. Similarly, since the second part of the input are utilised to generate the second part of the synthetic light field that is reflected towards the second eye, it can be understood that the second part of the input correspond to the second eye. In this regard, since the input would comprise a plurality of pixels of the light field image, the at least one processor is configured to ascertain which pixels from amongst the plurality of pixels would correspond to the first eye and which pixels from amongst the plurality of pixels would correspond to the second eye, i.e., light produced by which pixels is to be directed towards the first eye and light produced by which pixels is to be directed towards the second eye. Thus, the at least one processor determines a position of each pixel of the first set and a position of each pixel of the second set. The technical benefit of determining said positions is that the at least one processor can accurately and realistically display the given synthetic 3D point, by utilising binocular disparity, based on the interpupillary distance and the optical depth at which the given synthetic 3D point is to be displayed.

It will be appreciated that when the at least one virtual object is to be presented at an optical depth that is similar to a native optical depth of the light-emitting component of the light field display unit from the at least one user, there is no need for displaying different virtual images to the first eye and the second eye; in other words, a same virtual image would be shown to both the eyes. Herein, the native optical depth of the light-emitting component is equal to a sum of a distance between a given eye of the given user and the optical combiner and a distance between the optical combiner and the light-emitting component. By "similar" hereinabove, it is meant that said optical depth is within, for example, 10 centimetre of the native optical depth. In a typical implementation inside a vehicle, the native optical depth may lie in a range of 100 cm to 300 cm.

When the at least one virtual object is to be presented to appear far away from the first eye and the second eye (for example, 100 metres away), this means that the given synthetic 3D point is to be displayed at an optical depth with respect to the first eye and the second eye that is much larger than the native optical depth of the light-emitting component, and thus, the distance between the given pixel of the first set and the given pixel of the second set may be similar to the interpupillary distance. By "similar" hereinabove, it is meant that said distance is within, for example, 1 centimetre of the interpupillary distance.

Similarly, when the at least one virtual object is to be presented to appear near the first eye and the second eye (for example, at a distance of 10 centimetres), this means that the given synthetic 3D point is to be displayed at an optical depth with respect to the first eye and the second eye that is much smaller than the native optical depth of the light-emitting component. In such a case, a degree of cross-eyedness increases for the given user. This occurs because the eyes of the given user need to converge more sharply to focus on nearby objects. In such a case, the distance between the given pixel of the first set and the given pixel of the second set may be similar to the interpupillary distance, or may be even more than the interpupillary distance (only constrained by physical dimensions of the light-emitting surface of the light field display unit).

On the other hand, when the at least one virtual object is to be presented at an optical depth that is not similar to the native optical depth, and that lies between the native optical depth and an infinite distance or between the native optical depth and zero optical depth, the distance between the given pixel of the first set and the given pixel of the second set may be smaller than the interpupillary distance. In such a case, said distance may be determined based on a convergence angle of the user's eyes.

The light emanating from the given pixel of the first set produces the given synthetic 3D point within the first part of the synthetic light field, and the light emanating from the given pixel of the second set produces the (same) given synthetic 3D point within the second part of the synthetic light field. However, it is to be understood that when the at least one virtual object is to be presented at an optical depth that is not similar to the native optical depth, a position of the (same) given synthetic 3D point would appear to be slightly offset, when the (same) given synthetic 3D point is viewed from a perspective of the first eye and from a perspective of the second eye, due to binocular disparity.

It will also be appreciated that when the optical depth at which the given synthetic 3D point is to be displayed is greater than the native optical depth of the light-emitting component of the light field display unit, a disparity between the given pixel of the first set and the given pixel of the second set would be positive. On the other hand, when the optical depth at which the given synthetic 3D point is to be displayed is smaller than the native optical depth, a disparity between a given pixel of the first set and a given pixel of the second set would be negative. Hereinabove, when the disparity is positive, a position of the given pixel of the first set would be on a side of the first eye, and a position of the given pixel of the second set would be on a side of the second eye. When the disparity is positive, said disparity may increase asymptotically to reach its maximum value, which is equal to the interpupillary distance. However, when the disparity is negative, a position of the given pixel of the first set would be on a side of the second eye, and a position of the given pixel of the second set would be on a side of the first eye, i.e., an order of the position of the given pixel of the first set and the position of the given pixel of the second set is swapped.

Optionally, the at least one processor is configured to: utilise the tracking means to determine a location of the first eye and a location of the second eye in a local coordinate space; and determine the interpupillary distance, based on the determined location of the first eye and the determined location of the second eye. Since the interpupillary distance can be accurately known to the at least one processor, and the optical depth at which the given synthetic 3D point is to be displayed is also readily known (as the at least one at least one processor is generating the input, the at least one processor may know at how much distance the at least one virtual object is to be displayed to the at least one user), the position of the given pixel of the first set and the position of the given pixel of the second set could be determined by the at least one processor, for example, by using a triangulation method.

In implementations where the virtual content presented by the synthetic light field corresponds to the at least one virtual object, the at least one processor is configured to determine a colour of the given pixel of the first set and a colour of the given pixel of the second set, by employing the 3D model of the at least one virtual object. Optionally, a colour of a given pixel is represented by a colour value. Such a colour value could, for example, be an RGB value, an RGB-A value, a CMYK value, a YUV value, an RGB-D value, an RYYB value, an RGGB value, an RGB-IR value, or similar. Optionally, the at least one processor is configured to employ at least one neural network for determining the colour of the given pixel. Optionally, the at least one neural network is implemented as a Neural Radiance Field (NeRF) model. The NeRF model is well-known in the art.

Optionally, the system further comprises at least one real-world-facing camera, wherein the at least one processor is configured to:
process images captured by the at least one real-world-facing camera, to generate a depth image of the real-world environment; and
determine the optical depth at which the given synthetic 3D point is to be displayed, based on the depth image.

The term *"real-world-facing camera"* refers to a camera that is arranged to face the real-world environment, and is employed to capture images of the real-world environment. Said images could be depth images and/or visible-light images of the real-world environment. As an example, the images may be captured as RGB-D images. It will be appreciated that a field of view of the real-world-facing camera at least partially overlaps with a field of view of the at least one user, in order to determine the optical depth based on the depth image of the real-world environment. Optionally, the real-world-facing camera is communicably coupled to the at least one processor. Optionally, the at least one real-world-facing camera is implemented as a depth camera. Optionally, the at least one real-world-facing camera is implemented as a combination of at least one visible-light camera and at least one depth camera.

In this regard, the images captured by the depth camera are (readily) obtained as depth images of the real-world environment. Additionally or alternatively, optionally, the at least one real-world-facing camera is implemented as a pair of visible-light cameras. In this regard, the images captured by the pair of visible-light cameras are obtained as stereo pairs of visible-light images of the real-world environment. Optionally, in such a case, the at least one processor is configured to generate a given depth image of the real-world environment by using stereo disparity between a given stereo pair of visible-light images. Furthermore, the term *"depth image"* refers to an image comprising information pertaining to optical depths of real-world objects or their portions present in the real-world environment. In other words, the depth image provides information pertaining to distances (namely, the optical depths) of surfaces of the real-world objects or their portions, from a perspective of a pose of the at least one real-world-facing camera. It is to be understood that depth images would also be indicative of placements, geometries, occlusions, and the like, of the real-world objects from various perspectives of poses of the at least one real-world-facing camera.

It will be appreciated that there may be a scenario where the at least one virtual object is to be presented in relation to some real-world object(s). In other words, an optical depth of the at least one virtual object may be determined based on an optical depth of a real-world object. For example, a virtual bird may be displayed with respect to a branch of a tree (i.e., a real-world object) such that an optical depth of the virtual bird is (almost) same as an optical depth of the branch of the tree. In such an example, the virtual bird would not appear to be hanging in front of the branch, neither would appear to be penetrated into the branch. Therefore, the at least one processor is optionally configured to utilise the depth image to identify real-world object(s) present within a real-world scene of the real-world environment in which the at least one virtual object is to be augmented. Such an identification could be performed, for example, by using at least one of: object identification, object segmentation, material identification. Techniques/algorithms for the object identification, the object segmentation, and the material identification are well-known in the art. Once the real-world object(s) are identified and their respective optical depths are known, the at least one processor is optionally configured to determine the optical depth of the given synthetic 3D point as an optical depth of a given real-world object (or its portion). Beneficially, in such a case, the first part and the second part of the synthetic light field would appear to be well-blended with the real-world light field, as the at least one virtual object would be accurately aligned/positioned with respect to the given real-world object. This significantly enhances an overall viewing experience of the at least one user (for example, in terms of realism and immersiveness), when the synthetic light field is produced to present the at least one virtual object to the at least one user. It will be appreciated that in some scenarios, the optical depth of the given synthetic 3D point may not always be same as the optical depth of the given real-world object. However, in such scenarios, the optical depth of the given real-world object can still be beneficial to be taken into account for determining the optical depth of the given synthetic 3D point, for improving an overall visual coherence and realism when producing the synthetic light field presenting the at least one virtual object.

Optionally, the at least one processor is configured to:
reproject the depth image of the real-world environment from a perspective of the at least one real-world-facing camera to a perspective of a location of a given eye of the at least one user; and
determine a height of the first eye and of the second eye of the at least one user from a ground level of the real-world environment, by utilising the reprojected depth image,
wherein the position of the given pixel of the first set and the position of the given pixel of the second set within the input are determined, further based on the height of the first eye and of the second eye of the at least one user, respectively.

Determining the position of the given pixel based on the height of the given eye from the ground level is particularly beneficial when the at least one virtual object is to be presented such that it appears to be on the ground level. As an example, the at least one virtual object may be presented such that it is standing on a road while the at least one user is sitting inside a vehicle driving on the road. Therefore, the height of the first eye and of the second eye of the at least one user can also be taken into account (in addition to the interpupillary distance and the optical depth of the given synthetic 3D point) for determining the position of the given pixel of the first set and the position of the given pixel of the second set, in a similar manner as discussed earlier. The technical benefit of considering the height of the given eye for the aforesaid determination is that positions of all relevant pixels (that may highly likely be visible to the given eye of the at least one user from a particular height) are determined, and thus the given synthetic 3D point can be accurately and realistically presented to the at least one user. This may enhance an overall viewing experience of the at least one user.

The aforesaid reprojection of the depth image of the real-world environment from the perspective of the at least one real-world-facing camera to the perspective of the location of the given eye of the at least one user could be performed because following information is already known to the at least one processor: (i) a relative location of the real-world-facing camera with respect to the optical combiner, and (ii) the relative location of the given eye with respect to the optical combiner. It will be appreciated that the aforesaid reprojection could be performed for both the first eye and the second eye, or be performed for any one of the first eye and the second eye. This is because a location of the first eye and a location of the second eye are almost same with respect to the real-world environment. Optionally, when reprojecting the depth image, the at least one processor is configured to employ at least one image reprojection algorithm. Image reprojection algorithms are well-known in the art.

Further, since the reprojected depth image comprises the optical depths of the real-world objects (or their portions) from the perspective of the location of the given eye, the at least one processor is optionally configured to determine an optical depth of a given portion of the ground level from the location of the given eye, using the reprojected depth image. It is to be understood that an optical axis of the given eye passes through a centre of the reprojected depth image (i.e., along a Z-axis), and a vertical field of view of the reprojected depth image is already known. Thus, the at least one processor can calculate the angle between an optical axis of the given eye and the optical depth of the given portion of the ground level, for example, by using an arithmetic function. Once the optical depth of the given portion of the ground level and the aforesaid angle are known, the height of the given eye from the ground level could be easily and accurately determined by the at least one processor, for example, by using a trigonometric function (such as a sine function).

Furthermore, optionally, the at least one processor is configured to generate projection matrices corresponding to the first eye and the second eye of the at least one user, based on the relative location of the first eye and of the second eye of the at least one user with respect to the optical combiner, wherein the projection matrices are utilised when generating the input. The term *"projection matrix"* refers to a specialised matrix that is employed to transform a 3D coordinate within a visual scene of an environment into a 2D coordinate in an image plane of a virtual camera, when generating the input. Typically, the projection matrix is used in a rendering process, particularly in perspective projection, wherein the visual scene of the environment is projected onto the image plane of the virtual camera. Moreover, in a camera space of the virtual camera, each 3D point in the visual scene may be defined relative to a perspective of the virtual camera. The projection matrix takes into account a viewing position, a viewing orientation, and a field of view of the virtual camera, to accurately project said 3D point onto the image plane. Such a projection simulates how the 3D visual scene would appear in a 2D manner when viewed from the perspective of the virtual camera. Pursuant to embodiments of the present disclosure, since the projection matrices are determined for both the first eye and the second eye (which can be considered to be similar to two virtual cameras), when said projection matrices are utilised when generating the input, it is ensured that the at least one virtual object would be accurately scaled and would appear to be well-positioned (namely, well-aligned) from a perspective of the relative location of the first eye and of the second eye. Beneficially, this allows the at least one user to perceive depth and perspective highly accurately when viewing the virtual content presented by the synthetic light field. Thus, an overall viewing experience of the at least one user (for example, in terms of realism and spatial coherence) is improved. Utilisation of the projection matrices during rendering is well-known in the art.

Optionally, when generating a given projection matrix corresponding to a given eye, the at least one processor is configured to:
determine a location of the given eye in a common coordinate space in which a position and an orientation of a virtual image that represents the virtual content is known, wherein the virtual image is to be presented to the given eye by reflecting a corresponding part of the synthetic light field towards the given eye using the optical combiner;
position a virtual camera at the location of the given eye;
orient an up-axis of the virtual camera to be orthogonal to a surface normal of an imaginary plane of the virtual image;
orient a depth-axis of the virtual camera towards a nearest point on the imaginary plane of the virtual image; and
align frustum planes of the given projection matrix along edges of the virtual image.

In this regard, the at least one processor is optionally configured to utilise the tracking means to determine the location of the given eye in the common coordinate space. The location of the given eye is required to be known because the virtual camera is to be positioned at said location for presenting the virtual image, from a perspective of the location of the given eye. Since the virtual image is to be presented by the synthetic light field that is produced by employing the input, the position and the orientation of the virtual image are readily known and accurately known to the at least one processor. The common coordinate space could be any coordinate space in which both the location of the given eye, and the position and the orientation of the virtual image are known. The term *"virtual image"* refers to an image that is presented to the virtual camera that is positioned at the location of the given eye, when the corresponding part of the synthetic light field is reflected off the optical combiner to incident towards the virtual camera (namely, the given eye). It is to be understood that by presenting virtual images corresponding to each eye of the at least one user, the user would perceive the at least one virtual object as having an optical depth and a volume.

The term *"up-axis"* of the virtual camera refers to a vertical axis of the virtual camera, namely an axis along which the virtual camera rotates from side-to-side (namely, along a yaw axis). The up-axis of the virtual camera is to be oriented in a manner that the up-axis is orthogonal to the surface normal of the imaginary plane of the virtual image, because the up-axis would then match with a native up-axis of an overall visual scene presented by the synthetic light field via the optical combiner. Thus, the virtual image could then be displayed directly to the given eye without any need for additional geometrical transformation (namely, geometrical adjustments); however, other orientations that are orthogonal to the surface normal are also theoretically possible. In these alternative orientations, the virtual image may be rotated/tilted differently in relation to the native up-axis of the overall visual scene accordingly. The depth-axis of the virtual camera is a Z-axis of the virtual camera. It will be appreciated that orienting the depth-axis towards the nearest point may facilitate in enhancing depth perception and reducing perspective distortion for the at least one user, especially, when the same input is to be employed to produce the synthetic light field for the plurality of users. It will also be appreciated that the frustum planes of the given projection matrix may define boundaries of a viewing frustum (namely, a viewing volume having a shape of a frustum) in a 3D space of a virtual environment from the perspective of a location of the virtual camera (namely, the perspective of the location of the given eye). In addition to this, when the frustum planes comprise a near plane and a far plane of the viewing frustum, a closest distance and a farthest distance for rendering virtual objects from said perspective are defined. The technical benefit of aligning the frustum planes along the edges of the virtual image is that it may be ensured that at least a portion of the at least one virtual object that is intended to be shown to the given eye is presented to the given eye accordingly. Such an alignment may also improve a rendering efficiency of the at least one processor and may enhance a realism of the viewing experience for the at least one user. Therefore, when the projection matrices (corresponding to both eyes) determined in this way are utilised for generating the input, the input is highly realistically and accurately generated.

In a case where the at least one user comprises a first user and a second user, and where the second user is present adjacent to (for example, on a left-hand-side of) the first user, and where the optical combiner is arranged to face the first user, the first user would view the virtual content directly in front of him/her without rotating his/head, whereas the second user would view the virtual content by rotating his/head at an angle. However, such a rotation of a user's head has no effect on the generation of the input. In other words, the input is generated based on the relative position of the first eye and of the second eye, to provide a perception of depth. Such a perception of depth can be provided, irrespective of how the user's head is oriented.

Moreover, optionally, the at least one user comprises a plurality of users, wherein the at least one processor is configured to:
detect when eyes of at least one of the plurality of users are closed or the at least one of the plurality of users is not looking towards the optical combiner; and
when it is detected that the eyes of the at least one of the plurality of users are closed or the at least one of the plurality of users is not looking towards the optical combiner, skip generating the input according to a relative location of each eye of the at least one of the plurality of users with respect to the optical combiner, during generation of the input.

Optionally, the at least one processor is configured to utilise the tracking data collected by the tracking means, for detecting when the eyes of the at least one of the plurality of users are closed. Optionally, in this regard, when the tracking data comprises a plurality of images of a given eye of a given user from amongst the plurality of users, the at least one processor is configured to: extract a plurality of features of the given eye from a given image; identify at least one of: a pupil of the given eye, a curvature of an eyelid of the given eye, a position of an eyelash of the given eye, a shape of the given eye, and a size of the given eye, based on the plurality of features, to detect when the given eye of the given user is closed. It will be appreciated that by extracting the plurality of features, the at least one processor could easily identify at least a part of the given eye. In an example, the given eye of the given user is detected to be closed when the pupil of the given eye is not identified/visible in the given image. Examples of the plurality of features include, but are not limited to, edges, corners, blobs, ridges, high-frequency features, low-frequency features. Optionally, the at least one processor is configured to employ at least one data processing algorithm for extracting the plurality of features from the given image. Examples of the at least one data processing algorithm include, but are not limited to, an edge-detection algorithm, a corner-detection algorithm, a feature descriptor algorithm, a feature detector algorithm. Techniques for detecting closed eyes of users using eye tracking is well-known in the art.

It will be appreciated that at some times, the at least one of the plurality of users may not be looking through the optical combiner. Optionally, in this regard, the at least one processor is configured to utilise the tracking means to determine a gaze direction of the given eye of the given user, wherein the tracking means is further configured to track and/or follow a gaze of the given eye. Therefore, by continuously determining the gaze direction of the given eye, the at least one processor could easily ascertain when a gaze of the at least one of the plurality of users aligns with (namely, conforms to) a location of the optical combiner, as then it may be highly likely that the at least one of the plurality of users is looking through the optical combiner. When the gaze of the at least one of the plurality of users is directed elsewhere (than the optical combiner), the at least one processor detects that the at least one of the plurality of users is not looking towards the optical combiner.

Further, when it is detected that the eyes are closed or the at least one of the plurality of users is not looking towards the optical combiner, it means that the at least one of the plurality of users is not viewing the virtual content presented by the synthetic light field, and thus generating the input for the at least one of the plurality of users would not be beneficial. Therefore, the generation of the input can be skipped accordingly. As an example, in a case where the input is implemented in the form of the light field image, those pixels of the light field image that correspond to each eye of the at least one of the plurality of users need not be generated at all, or if they have already been generated, then they do not need to be displayed via the light field display unit, such that said pixels would display black (i.e., no light). Advantageously, skipping generation of the input for the at least one of the plurality of users potentially facilitates in saving processing resources and processing time of the at least one processor. Turning off said pixels of the input may also minimise a potential light leakage from said pixels, as by keeping inactive pixels black, they act as a barrier to prevent leaking/straying of the light into neighbouring parts of the synthetic light field.

Optionally, the at least one processor is configured to:
when it is detected that the eyes of the at least one of the plurality of users are closed or the at least one of the plurality of users is not looking towards the optical combiner,
identify a given part of the input that corresponds to a given eye of the at least one of the plurality of users; and
utilise at least a subset of the given part of the input to produce additional light to supplement another part of the synthetic light field corresponding to at least one other of the plurality of users.

In this regard, when eyes of the at least one other of the plurality of users are open and the at least one other of the plurality of users is actually looking towards the optical combiner, the at least one processor could beneficially utilise at least the subset of the given part of the input to produce the additional light to supplement the another part of the synthetic light field that is to be displayed to the at least one other of the plurality of users. Optionally, in such a case, the at least one processor is configured to generate the input and control the multiscopic optical element, based on a relative location of each eye of the at least one other of the plurality of users with respect to the optical combiner, to direct the additional light produced by the given part of the input to supplement the another part of the synthetic light field (to be viewed by the at least one other of the plurality of users). The technical benefit of the aforesaid utilisation is that rather than eliminating the potential light leakage entirely, the given part of the input could be harnessed purposefully (in the aforesaid manner) to improve an overall image quality of the synthetic light field in specific viewing directions/positions. In other words, a visual quality (for example, in terms of a resolution) of the synthetic light field can be significantly improved for the at least one other of the plurality of users. In implementations where the input is implemented in the form of the light field image, pixels of the given part of the input may be adjacent to pixels of another part of the input that corresponds to a given eye of the at least one other of the plurality of users, and thus the pixels of the given part of the input can be controlled to emit the additional light of a similar colour/intensity as that of the pixels of the another part.

Moreover, optionally, the at least one processor is configured to:
when it is detected that the eyes of the at least one of the plurality of users are closed,
predict a duration for which the eyes of the at least one of the plurality of users are likely to remain closed; and
skip generating the input according to the relative location of each eye of the at least one of the plurality of users with respect to the optical combiner for the predicted duration, during generation of the input.

In this regard, the at least one processor is optionally configured to utilise the tracking data collected by the tracking means to ascertain when eyes of a given user are closed and when the eyes of the given user are reopened. For a given time period for which the tracking data has been collected, the at least one processor can easily analyse a pattern of closure of the eyes and re-opening of the eyes, to identify recurring durations for which the eyes (actually) remain closed. Thus, the at least one processor is optionally configured to determine a probability distribution of likely closed-eye durations for the given user, based on said recurring durations for which the eyes remain closed; and when it is detected that the eyes of the at least one of the plurality of users are closed, utilise said probability distribution to predict the duration for which the eyes are likely to remain closed. It will be appreciated that a typical duration for which the human eye is closed during a natural blink may lie in a range of 100 milliseconds to 500 milliseconds. However, said duration could be longer, and may also range from a fraction of a second to several seconds, for example, during an extended period of relaxation (such as sleep), due to voluntary eye closures (such as for brief periods of rest for the eyes or reducing exposure to bright light), or the like.

Further, when it is detected that the eyes are likely to remain closed for the predicted duration, it means that the at least one of the plurality of users is unable to view the synthetic light field during the predicted duration, and thus generating the input according to the relative location of the eyes of the at least one of the plurality of users in such a case would not be beneficial. Therefore, the generation of the input can be skipped accordingly for the at least one of the plurality of users for the predicted duration, in a similar manner as discussed earlier. Beneficially, skipping generation of the input for the at least one of the plurality of users potentially facilitates in saving processing resources and processing time of the at least one processor for the predicted duration.

The present disclosure also relates to the method as described above. Various embodiments and variants disclosed above, with respect to the aforementioned first aspect, apply mutatis mutandis to the method.

Optionally, the method further comprises utilising the tracking means to also determine a relative location of a camera lens of a camera with respect to the optical combiner,
wherein the input is generated further based on the relative location of the camera lens with respect to the optical combiner, and
wherein the optical combiner is employed to reflect a third part of the synthetic light field towards the camera lens of the camera, whilst optically combining the third part of the synthetic light field with the real-world light field.

Optionally, in the method, the optical combiner has a curved surface, and wherein the input is generated further based on a curvature of the optical combiner.

Optionally, the light field display unit comprises a multiscopic optical element, wherein the method further comprises controlling the multiscopic optical element, based on the relative location of the first eye and of the second eye of the at least one user with respect to the optical combiner, to direct light produced by a first part of the input and a second part of the input to generate the first part and the second part of the synthetic light field, respectively.

Optionally, in the method, the input is in a form of a light field image, wherein a first part of the input and a second part of the input comprise a first set of pixels and a second set of pixels corresponding to the first eye and the second eye of the at least one user, respectively, wherein the step of generating the input comprises determining, within the input, a position of a given pixel of the first set and a position of a given pixel of the second set that correspond to a given synthetic three-dimensional (3D) point, based on an interpupillary distance between the first eye and the second eye of the at least one user and an optical depth at which the given synthetic 3D point is to be displayed.

Optionally, the method further comprises:
processing images captured by at least one real-world-facing camera, to generate a depth image of the real-world environment; and
determining the optical depth at which the given synthetic 3D point is to be displayed, based on the depth image.

Optionally, the method further comprises:
reprojecting the depth image of the real-world environment from a perspective of the at least one real-world-facing camera to a perspective of a location of a given eye of the at least one user; and
determining a height of the first eye and of the second eye of the at least one user from a ground level of the real-world environment, by utilising the reprojected depth image,
wherein the position of the given pixel of the first set and the position of the given pixel of the second set within the input are determined, further based on the height of the first eye and of the second eye of the at least one user, respectively.

Optionally, the method further comprises generating projection matrices corresponding to the first eye and the second eye of the at least one user, based on the relative location of the first eye and of the second eye of the at least one user with respect to the optical combiner, wherein the projection matrices are utilised when generating the input.

Optionally, in the method, the step of generating a given projection matrix corresponding to a given eye comprises:
determining a location of the given eye in a common coordinate space in which a position and an orientation of a virtual image that represents the virtual content is known, wherein the virtual image is to be presented to the given eye by reflecting a corresponding part of the synthetic light field towards the given eye using the optical combiner;
positioning a virtual camera at the location of the given eye;
orienting an up-axis of the virtual camera to be orthogonal to a surface normal of an imaginary plane of the virtual image;
orienting a depth-axis of the virtual camera towards a nearest point on the imaginary plane of the virtual image; and
aligning frustum planes of the given projection matrix along edges of the virtual image.

Optionally, the at least one user comprises a plurality of users, wherein the method further comprises:
detecting when eyes of at least one of the plurality of users are closed or the at least one of the plurality of users is not looking towards the optical combiner; and
when it is detected that the eyes of the at least one of the plurality of users are closed or the at least one of the plurality of users is not looking towards the optical combiner, skipping generating the input according to a relative location of each eye of the at least one of the plurality of users with respect to the optical combiner, during generation of the input.

Optionally, the method further comprises:
when it is detected that the eyes of the at least one of the plurality of users are closed or the at least one of the plurality of users is not looking towards the optical combiner,
identifying a given part of the input that corresponds to a given eye of the at least one of the plurality of users; and
utilising at least a subset of the given part of the input to produce additional light to supplement another part of the synthetic light field corresponding to at least one other of the plurality of users.

Optionally, the method further comprises:
when it is detected that the eyes of the at least one of the plurality of users are closed,
predicting a duration for which the eyes of the at least one of the plurality of users are likely to remain closed; and
skipping generating the input according to the relative location of each eye of the at least one of the plurality of users with respect to the optical combiner for the predicted duration, during generation of the input.

### DETAILED DESCRIPTION OF THE DRAWINGS

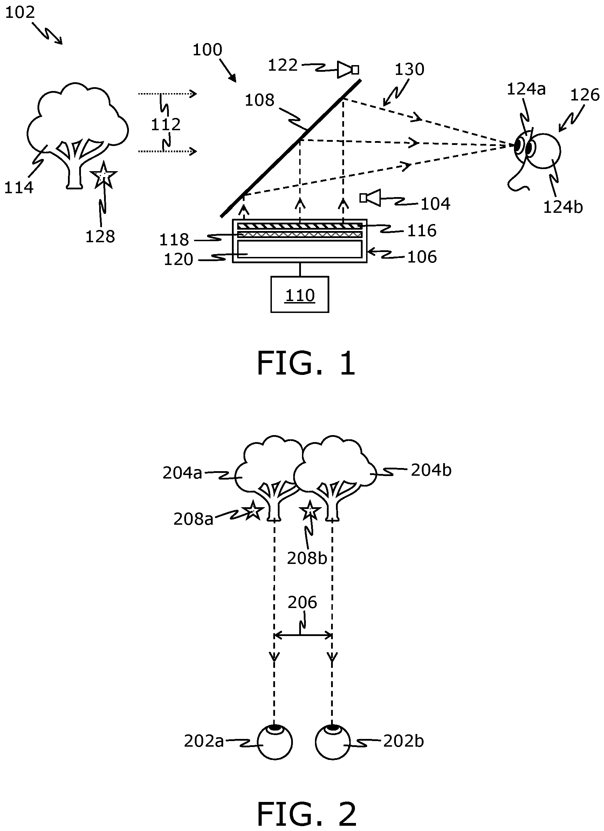

Referring to FIG. 1, illustrated is an example implementation of a system **100** incorporating light field display based on a relative location of a viewer, in accordance with an embodiment of the present disclosure. The system **100** is shown to be employed in a real-world environment **102.** The system **100** comprises tracking means **104,** a light field display unit **106,** an optical combiner **108,** and at least one processor (depicted as a processor **110).** The tracking means **104** is shown to be implemented, for example, as a tracking camera. The optical combiner **108** is arranged on an optical path of the light field display unit **106** and on an optical path of a real-world light field **112** of the real-world environment **102.** In the real-world environment **102,** there are one or more real-world objects, depicted as a real-world object **114** (for example, such as a tree). Optionally, the light field display unit **106** comprises a multiscopic optical element **116** (depicted using a diagonal stripes pattern). Optionally, the light field display unit **106** further comprises a liquid-crystal display (LCD) **118** (depicted using a wavy pattern) and a backlight **120.** When the multiscopic optical element **116** is implemented as a parallax barrier, the parallax barrier can be arranged on a light-emitting surface of the LCD **118,** or between the LCD **118** and the backlight **120.** Optionally, the system **100** further comprises at least one real-world-facing camera (depicted as a real-world-facing camera **122).**

When the system **100** is in use, the tracking means **104** is utilised by the processor **110** to determine a relative location of a first eye **124a** and of a second eye **124b** of a user **126** with respect to the optical combiner **108.** An input to be employed by the light field display unit **106** is generated by the processor **110,** based on the relative location of the first eye **124a** and of the second eye **124b** of the user **126.** The input is employed at the light field display unit **106** to produce a synthetic light field **130** presenting virtual content **128,** for example, such as a virtual object (depicted as a star having a dotted pattern). For illustration purposes only, the virtual content **128** is shown to be presented at an optical depth that is (almost) same as an optical depth of the real-world object **114.** The optical combiner **108** is employed to reflect a first part and a second part of the synthetic light field **130** towards the first eye **124a** and the second eye **124b,** respectively, whilst optically combining the first part and the second part of the synthetic light field **130** with the real-world light field **112.**

It may be understood by a person skilled in the art that FIG. 1 includes a simplified example implementation of the system **100,** for sake of clarity, which should not unduly limit the scope of the claims herein. It is to be understood that the specific implementation of the system **100** is not to be construed as limiting it to specific numbers or types of tracking means, light field display units, optical combiners, processors, real-world-facing cameras, and multiscopic optical elements. The person skilled in the art will recognize many variations, alternatives, and modifications of embodiments of the present disclosure.

Referring to FIG. 2, illustrated is an exemplary scenario of how a first eye **202a** and a second eye **202b** of a user view a real-world object and a virtual object, in accordance with an embodiment of the present disclosure. With reference to FIG. 2, the user views the real-world object (for example, depicted as a tree) that lies at a near-infinite distance from the first eye **202a** and the second eye **202b.** From a perspective of the first eye **202a,** the tree is visible as a real-world object **204a,** whereas from a perspective of the second eye **202b,** the same tree is visible as a real-world object **204b.** Thus, the same real-world object (i.e. the tree) is visible to the first eye **202a** and the second eye **202b** from slightly different perspectives, such that a distance between the real-world object **204a** and the real-world object **204b** is approximately equal to an interpupillary distance (IPD) **206** between the first eye **202a** and the second eye **202b.** Thus, when a virtual object **208a** is to be displayed to the first eye **202a,** and the same virtual object **208b** is to be displayed to the second eye **202a** at the near-infinite distance, a distance between the virtual object **208a** and the virtual object **208b** is employed to be approximately equal to the IPD **206.**

Referring to FIGs. 3A and 3B, illustrated are two different exemplary implementations of a multiscopic optical element **300,** in accordance with different embodiments of the present disclosure. With reference to FIG. 3A, the multiscopic optical element **300** is implemented as a lenticular array. For sake of simplicity and clarity, only a portion of the lenticular array that corresponds to a part of a light-emitting component of the light field display unit **302** is shown in one dimension. The shown portion of the lenticular array comprise five cylindrical microlenses **304** arranged in a side-by-side manner, wherein a given microlens of the lenticular array corresponds to a group of two neighbouring pixels in the light-emitting component of the light field display unit **302.** One pixel of said group is depicted, for example, using a dotted pattern, and another pixel of said group is depicted, for example, using a diagonal stripes pattern.

With reference to FIG. 3B, the multiscopic optical element **300** is implemented as a parallax barrier. For sake of simplicity and clarity, only a portion of the parallax barrier that corresponds to a part of the light-emitting component of the light field display unit **302** is shown in one dimension. The shown portion of the parallax barrier comprise six opaque portions **306** (depicted using a diagonal brick pattern) and five transparent portions **308,** each transparent portions being arranged between two adjacent opaque portions. The parallax barrier is arranged in front of the light-emitting component of the light field display unit **302** in a manner that a given opaque portion blocks light produced by a given pixel of the light-emitting component towards a given eye of a user, whereas a given transparent portion directs light emanating from a given pixel of the light-emitting component towards another given eye of the user.

With reference to FIGs. 3A and 3B, when an input is employed at the light field display unit **302** to produce a synthetic light field, the multiscopic optical element **300** is controlled (for example, by at least one processor) in a manner that light (for example, depicted using dotted lines) emanating from pixels **310a** (i.e., all pixels depicted using the dotted pattern) in the light emitting-component of the light field display unit **302** generates a first part of the synthetic light field corresponding to a first eye **312a** of the user. Simultaneously, light (for example, depicted using dashed lines) emanating from pixels **310b** (i.e., all pixels depicted using the diagonal stripes pattern) in the light-emitting component of the light field display unit **302** generates a second part of the synthetic light field corresponding to a second eye **312b** of the user. It will be appreciated that upon generation of the first part and the second part of the synthetic light field, said first part and said second part are reflected off an optical combiner (not shown in FIGs. 3A and 3B, for sake of simplicity and clarity) to be incident towards the first eye **312a** and the second eye **312b,** respectively.

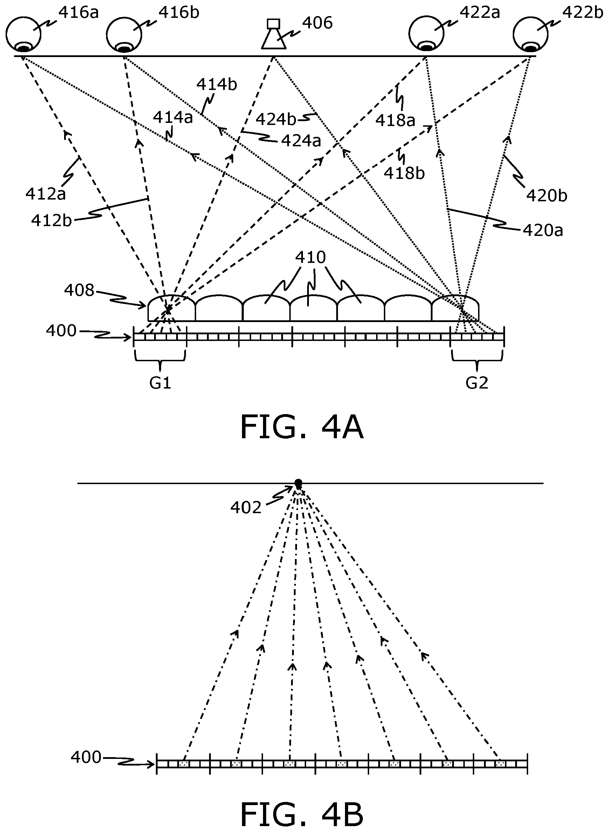

Referring to FIGs. 4A and 4B, FIG. 4A illustrates an example scenario of how a light-emitting component of a light field display unit **400** produces a synthetic light field for different viewers, while FIG. 4B illustrates exemplary positions of pixels within the light-emitting component of the light field display unit **400** from a perspective of a viewer **402** present in a real-world environment, in accordance with an embodiment of the present disclosure. With reference to FIGs. 4A and 4B, for sake of simplicity and clarity, only a portion of the light-emitting component of the light field display unit **400** is shown in one dimension. With reference to FIG. 4A, the light-emitting component of the light field display unit **400** produces the synthetic light field for a first user, a second user, and a camera **406.** With reference to FIG. 4A, a multiscopic optical element **408,** for example, implemented as a lenticular array, is optionally employed. For sake of simplicity and clarity, the lenticular array is shown to comprise seven cylindrical microlenses **410** arranged in a side-by-side manner, wherein a given microlens of the lenticular array has been shown to correspond to, for example, a group of five pixels in the light-emitting component of the light field display unit **400.** For sake of better understanding, light emanating from pixels of only two groups **G1** and **G2** (in the light-emitting component of the light field display unit **400)** is shown to be controlled using the multiscopic optical element **408.** In an actual implementation, light emanating from all pixels in the light-emitting component of the light field display unit **400** would be controlled using the multiscopic optical element **408** accordingly, in a similar manner. The light emanating from the pixels of the group **G1** is depicted using dashed lines, and the light emanating from the pixels of the group **G2** is depicted using dotted lines.

Light **412a** emanating from a first pixel of the group **G1** and light **414a** emanating from a first pixel of the group **G2** generate a first part of the synthetic light field corresponding to a location of a first eye **416a** of the first user. Simultaneously, light **412b** emanating from a second pixel of the group **G1** and light **414b** emanating from a second pixel of the group **G2** generate a second part of the synthetic light field corresponding to a location of a second eye **416b** of the first user. Further, light **418a** emanating from a third pixel of the group **G1** and light **420a** emanating from a third pixel of the group **G2** generate a first part of the synthetic light field corresponding to a location of a first eye **422a** of the second user. Simultaneously, light **418b** emanating from a fourth pixel of the group **G1** and light **420b** emanating from a fourth pixel of the group **G2** generate a second part of the synthetic light field corresponding to a location of a second eye **422b** of the second user. It will be appreciated that upon generation of the first part and the second part of the synthetic light field, said first part and said second part are reflected off an optical combiner (not shown, for sake of simplicity and clarity) to be incident towards respective first eyes and respective second eyes.

Moreover, light **424a** emanating from a fifth pixel of the group **G1** and light **424b** emanating from a fifth pixel of the group **G2** generate a third part of the synthetic light field corresponding to a location of a camera lens of the camera **406.** It will be appreciated that upon generation of the third part of the synthetic light field, said third part is reflected off the optical combiner to be incident towards the camera **406.**

With reference to FIG. 4B, the viewer **402** could, for example, be a given eye of a user or a camera lens of a camera. As shown, out of each group of pixels in the light-emitting component of the light field display unit **400,** visual information corresponding to only a few pixels (for example, shown as a single pixel depicted using a dotted pattern) in each group is directed towards the viewer **402,** when the light-emitting component of the light field display unit **400** produces the synthetic light field. Thus, light emanating from only those pixels in the light-emitting component of the light field display unit **400** are controlled by the multiscopic optical element, to generate a corresponding part of the synthetic light field corresponding to the location of the viewer **402.**

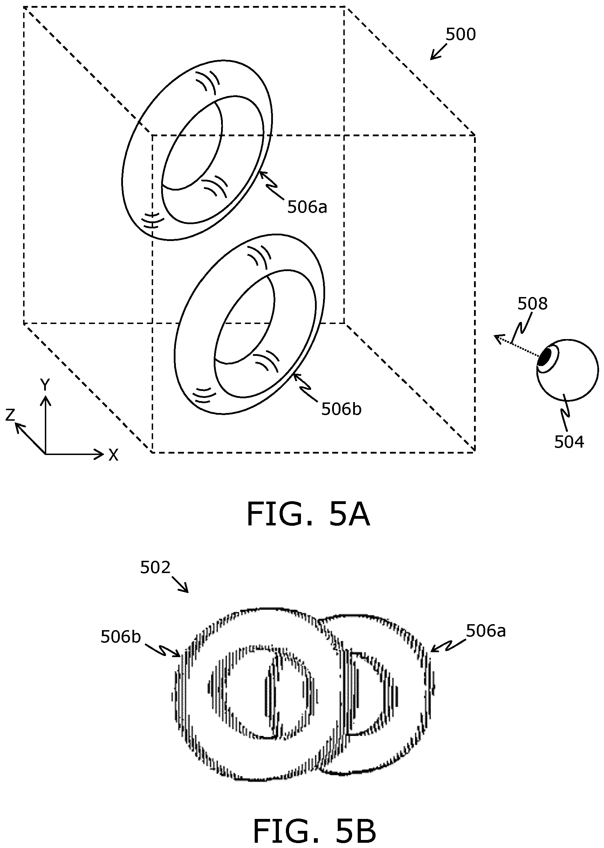

Referring to FIG. 5A, illustrated is an exemplary three-dimensional (3D) model **500** of a virtual environment, while FIG. 5B illustrates an input **502** that is generated based on a relative location of a given eye **504** of a user with respect to an optical combiner (not shown), in accordance with an embodiment of the present disclosure. The term *"given eye"* encompasses at least one of: a first eye, a second eye, of the user. With reference to FIG. 5A, a 3D space of the virtual environment is shown to comprise two virtual objects **506a** and **506b** having a donut-like shape. The virtual objects **506a-b** are arranged at an angle with respect to each other within the 3D space of the virtual environment. The 3D model **500** may be in the form of a 3D polygonal mesh, a 3D point cloud, a 3D surface cloud, a voxel-based model, or similar. The 3D model **500** is represented in a given coordinate space, for example, such as a Cartesian coordinate space having a predefined origin and three mutually perpendicular X, Y, and Z coordinate axes.

With reference to FIG. 5B, the input **502** is generated from a perspective **508** of the relative location of the given eye **504,** using the 3D model **500** of the virtual environment. As shown, from said perspective **508,** the virtual object **506b** is fully visible and the virtual object **506a** is partially visible (as the virtual object **506a** is partially occluded by a part of the virtual object **506b).** Moreover, an optical depth of the virtual object **506a** is greater than an optical depth of the virtual object **506b,** with respect to said perspective **508.** It will be appreciated that the input **502** is shown to be generated as a light field image comprising a plurality of pixels, wherein a first part of the input **502** from amongst the plurality of pixels is responsible for generating a first part of a synthetic light field that corresponds to a first eye of the user, and a second part of the input **502** from amongst the plurality of pixels is responsible for generating a second part of the synthetic light field that corresponds to a second eye of the user. As shown, pixels belonging to the first part of the input **502** and pixels belonging to the second part of the input **502** are arranged in an alternating vertical stripes across a horizontal field of view of the input **502.** In this way, the input **502** has a considerably different appearance as compared to a conventional 2D image, because the (single) input **502** comprises visual information corresponding to the first eye and the second eye of the user.

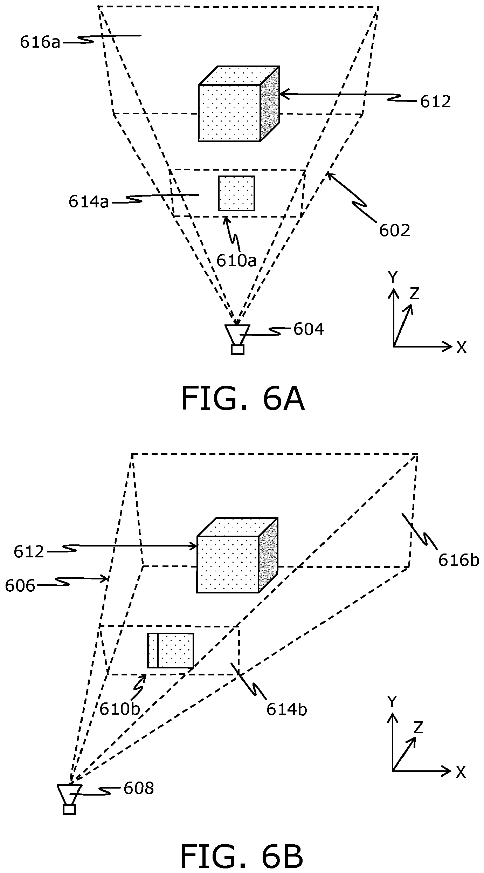

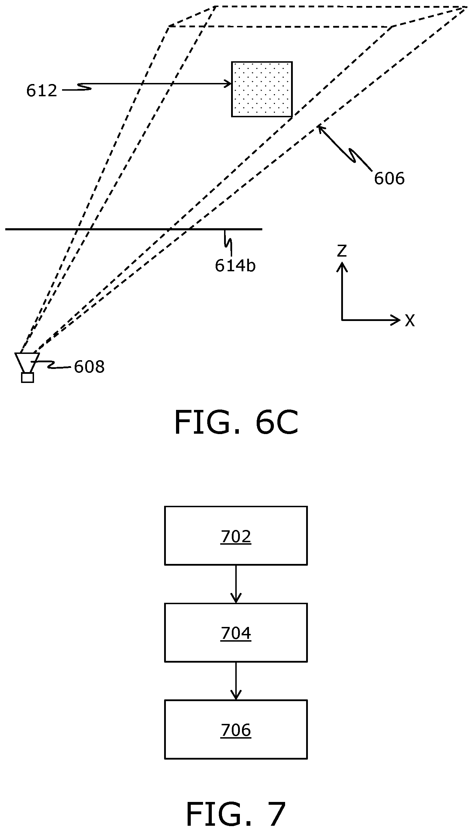

Referring to FIGs. 6A, 6B, and 6C, FIG. 6A illustrates a viewing frustum **602** of a virtual camera **604** utilised for generating a projection matrix corresponding to a given eye of a first user, FIG. 6B illustrates a viewing frustum **606** of a given virtual camera **608** utilised for generating a projection matrix corresponding to a given eye of a second user, while FIG. 6C illustrates a top view of said viewing frustum **606** of the given virtual camera **608** corresponding to the given eye of the second user, in accordance with an embodiment of the present disclosure.

With reference to FIG. 6A, the viewing frustum **602** is generated from a perspective of the given eye of the first user. A viewing frustum represents a viewing volume in a three-dimensional (3D) space according to a field of view of a virtual camera. The given eye could be one of: a first eye, a second eye, of a given user. A virtual image **610a** representing virtual content **612,** for example, such as a virtual object (depicted as a dotted cube) is to be displayed to the given eye of the first user (upon reflecting a corresponding part of a synthetic light field towards the given eye using an optical combiner). With reference to FIG. 6A, the virtual content **612** lies within a near plane **614a** and a far plane **616a** of the viewing frustum **602,** and only a front face of the cube is visible to the given eye of the first user in the virtual image **610a** that is formed at the near plane **614a.** In the aforesaid scenario, an up-axis (namely, a Y-axis) of the virtual camera **604** is oriented to be orthogonal to a surface normal of an imaginary plane (namely, the near plane **614a)** of the virtual image **610a.** Moreover, a depth-axis (namely, a Z-axis) of the virtual camera **604** is oriented towards a nearest point on the imaginary plane, and frustum planes of the projection matrix (corresponding to the given eye of the first user) are aligned along edges of the virtual image **610a.**

With reference to FIG. 6B, the viewing frustum **606** is generated from a perspective of the given eye of the second user. A virtual image **610b** representing the virtual content **612** is to be displayed to the given eye of the second user. As shown in FIG. 6B, the (same) virtual content **612** lies within a near plane **614b** and a far plane **616b** of the viewing frustum **606,** and a front face and a portion of a side face of the cube is visible to the given eye of the second user in the virtual image **610b** that is formed at the near plane **614b.** With reference to FIGs. 6B and 6C, as shown, an up-axis (namely, a Y-axis) of the virtual camera **608** is oriented to be orthogonal to a surface normal of an imaginary plane (namely, the near plane **614b)** of the virtual image **610b.** Moreover, a depth-axis (namely, a Z-axis) of the virtual camera **608** is oriented towards a nearest point on the imaginary plane, and frustum planes of the projection matrix (corresponding to the given eye of the second user) are aligned along edges of the virtual image **610b.**

FIGs. 2, 3A-3B, 4A-4B, 5A-5B, and 6A-6C are merely examples, which should not unduly limit the scope of the claims herein. A person skilled in the art will recognize many variations, alternatives, and modifications of embodiments of the present disclosure.

Referring to FIG. 7, illustrated are steps of a method incorporating a light field display based on a relative location of a viewer, in accordance with an embodiment of the present disclosure. At step **702,** tracking means are utilised to determine a relative location of a first eye and of a second eye of at least one user with respect to an optical combiner, wherein the optical combiner is arranged on an optical path of a light field display unit and on an optical path of a real-world light field of a real-world environment. At step **704,** an input to be employed by the light field display unit is generated, based on the relative location of the first eye and of the second eye of the at least one user with respect to the optical combiner. At step **706,** the input is employed at the light field display unit to produce a synthetic light field presenting virtual content, wherein the optical combiner is employed to reflect a first part and a second part of the synthetic light field towards the first eye and the second eye of the at least one user, respectively, whilst optically combining the first part and the second part of the synthetic light field with the real-world light field.

The aforementioned steps are only illustrative and other alternatives can also be provided where one or more steps are added, one or more steps are removed, or one or more steps are provided in a different sequence without departing from the scope of the claims herein.

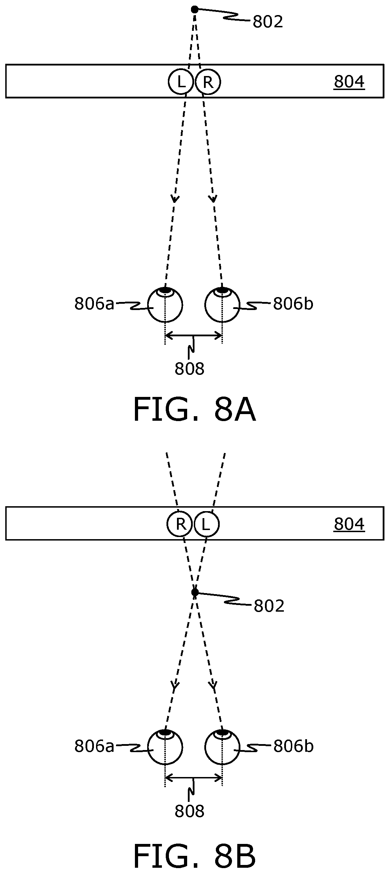

Referring to FIGs. 8A and 8B, illustrated are two different exemplary scenarios of how a disparity between a given pixel **L** of a first set and a given pixel **R** of a second set varies with respect to an optical depth at which a given synthetic 3D point **802** is to be displayed, in accordance with an embodiment of the present disclosure. With reference to FIG. 8A, for a first scenario, when the optical depth at which the given synthetic 3D point **802** is to be displayed is greater than a native optical depth of a light-emitting component of a light field display unit **804,** the disparity between the given pixel **L** of the first set and the given pixel **R** of the second set is positive. As shown, when the disparity is positive, a position of the given pixel **L** of the first set is towards a side of a first eye **806a,** and a position of the given pixel **R** of the second set is towards a side of a second eye **806b.** When the disparity is positive, said disparity may increase asymptotically to reach its maximum value, which is equal to an interpupillary distance **808** between the first eye **806a** and the second eye **806b.** With reference to FIG. 8B, when the optical depth at which the given synthetic 3D point **802** is to be displayed is smaller than the native optical depth, the disparity between the given pixel **L** of the first set and the given pixel **R** of the second set is negative. As shown, when the disparity is negative, the position of the given pixel L of the first set is towards the side of the second eye **806b,** and the position of the given pixel **R** of the second set is towards the side of the first eye **806a,** i.e., an order of the position of the given pixel **L** of the first set and the position of the given pixel **R** of the second set is swapped, as compared to when the disparity is positive.

FIGs. 8A and 8B are merely examples, which should not unduly limit the scope of the claims herein. A person skilled in the art will recognize many variations, alternatives, and modifications of embodiments of the present disclosure.

## Claims

1. A system (100) comprising:
tracking means (104);
a light field display unit (106, 302, 400, 804);
an optical combiner (108) arranged on an optical path of the light field display unit and on an optical path of a real-world light field (112) of a real-world environment (102); and
at least one processor (110) configured to:
utilise the tracking means to determine a relative location of a first eye (124a, 202a, 312a, 416a, 422a, 504, 806a) and of a second eye (124b, 202b, 312b, 416b, 422b, 504, 806b) of at least one user (126) with respect to the optical combiner;
generate an input (502) to be employed by the light field display unit for producing a synthetic light field (130), based on the relative location of the first eye and of the second eye of the at least one user with respect to the optical combiner; and
employ the input at the light field display unit to produce the synthetic light field presenting virtual content (128, 612), wherein the optical combiner is employed to reflect a first part and a second part of the synthetic light field towards the first eye and the second eye of the at least one user, respectively, whilst optically combining the first part and the second part of the synthetic light field with the real-world light field.

2. The system (100) of claim 1, wherein the at least one processor (110) is configured to utilise the tracking means (104) to also determine a relative location of a camera lens of a camera (406) with respect to the optical combiner (108),
wherein the input (502) is generated further based on the relative location of the camera lens with respect to the optical combiner, and
wherein the optical combiner is employed to reflect a third part of the synthetic light field (130) towards the camera lens of the camera, whilst optically combining the third part of the synthetic light field with the real-world light field (112).

3. The system (100) of any of the preceding claims, wherein the optical combiner (108) has a curved surface, wherein the input (502) is generated further based on a curvature of the optical combiner.

4. The system (100) of any of the preceding claims, wherein the light field display unit (106, 302, 400, 804) comprises a multiscopic optical element (116, 300, 408), wherein the at least one processor (110) is configured to control the multiscopic optical element, based on the relative location of the first eye (124a, 202a, 312a, 416a, 422a, 504, 806a) and of the second eye (124b, 202b, 312b, 416b, 422b, 504, 806b) of the at least one user (126) with respect to the optical combiner (108), to direct light produced by a first part of the input (502) and a second part of the input to generate the first part and the second part of the synthetic light field (130), respectively.

5. The system (100) of any of the preceding claims, wherein the input (502) is in a form of a light field image, wherein a first part of the input and a second part of the input comprise a first set of pixels and a second set of pixels corresponding to the first eye (124a, 202a, 312a, 416a, 422a, 504, 806a) and the second eye (124b, 202b, 312b, 416b, 422b, 504, 806b) of the at least one user (126), respectively, wherein when generating the input, the at least one processor (110) is configured to determine, within the light field image, a position of a given pixel (L) of the first set and a position of a given pixel (R) of the second set that correspond to a given synthetic three-dimensional (3D) point (802), based on an interpupillary distance (206, 808) between the first eye and the second eye of the at least one user and an optical depth at which the given synthetic 3D point is to be displayed.

6. The system (100) of claim 5, further comprising at least one real-world-facing camera (122), wherein the at least one processor (110) is configured to:
process images captured by the at least one real-world-facing camera, to generate a depth image of the real-world environment (102); and
determine the optical depth at which the given synthetic 3D point (802) is to be displayed, based on the depth image.

7. The system (100) of claim 6, wherein the at least one processor (110) is configured to:
reproject the depth image of the real-world environment (102) from a perspective of the at least one real-world-facing camera (122) to a perspective of a location of a given eye of the at least one user (126); and
determine a height of the first eye (124a, 202a, 312a, 416a, 422a, 504, 806a) and of the second eye (124b, 202b, 312b, 416b, 422b, 504, 806b) of the at least one user from a ground level of the real-world environment, by utilising the reprojected depth image,
wherein the position of the given pixel (L) of the first set and the position of the given pixel (R) of the second set within the light field image are determined, further based on the height of the first eye and of the second eye of the at least one user, respectively.

8. The system (100) of any of the preceding claims, wherein the at least one processor (110) is configured to generate projection matrices corresponding to the first eye (124a, 202a, 312a, 416a, 422a, 504, 806a) and the second eye (124b, 202b, 312b, 416b, 422b, 504, 806b) of the at least one user (126), based on the relative location of the first eye and of the second eye of the at least one user with respect to the optical combiner (108), wherein the projection matrices are utilised when generating the input (502).

9. The system (100) of claim 8, wherein when generating a given projection matrix corresponding to a given eye (124a-b, 202a-b, 312a-b, 416a-b, 422a-b, 504, 806a-b), the at least one processor (110) is configured to:
determine a location of the given eye in a common coordinate space in which a position and an orientation of a virtual image (610a-b) that represents the virtual content (128, 612) is known, wherein the virtual image is to be presented to the given eye by reflecting a corresponding part of the synthetic light field (130) towards the given eye using the optical combiner (108);
position a virtual camera (604, 608) at the location of the given eye;
orient an up-axis of the virtual camera to be orthogonal to a surface normal of an imaginary plane of the virtual image;
orient a depth-axis of the virtual camera towards a nearest point on the imaginary plane of the virtual image; and
align frustum planes of the given projection matrix along edges of the virtual image.

10. The system (100) of any of the preceding claims, wherein the at least one user (126) comprises a plurality of users, wherein the at least one processor (110) is configured to:
detect when eyes (124a-b, 202a-b, 312a-b, 416a-b, 422a-b, 504, 806a-b) of at least one of the plurality of users are closed or the at least one of the plurality of users is not looking towards the optical combiner (108); and
when it is detected that the eyes of the at least one of the plurality of users are closed or the at least one of the plurality of users is not looking towards the optical combiner, skip generating the input (502) according to a relative location of each eye of the at least one of the plurality of users with respect to the optical combiner, during generation of the input.

11. The system (100) of claim 10, wherein the at least one processor (110) is configured to:
when it is detected that the eyes of the at least one of the plurality of users are closed or the at least one of the plurality of users is not looking towards the optical combiner (108),
identify a given part of the input (502) that corresponds to a given eye (124a-b, 202a-b, 312a-b, 416a-b, 422a-b, 504, 806a-b) of the at least one of the plurality of users; and
utilise at least a subset of the given part of the input to produce additional light to supplement another part of the synthetic light field (130) corresponding to at least one other of the plurality of users.

12. The system (100) of claim 10 or 11, wherein the at least one processor (110) is configured to:
when it is detected that the eyes (124a-b, 202a-b, 312a-b, 416a-b, 422a-b, 504, 806a-b) of the at least one of the plurality of users are closed,
predict a duration for which the eyes of the at least one of the plurality of users are likely to remain closed; and
skip generating the input (502) according to the relative location of each eye of the at least one of the plurality of users with respect to the optical combiner (108) for the predicted duration, during generation of the input.

13. A method comprising:
utilising tracking means (104) to determine a relative location of a first eye (124a, 202a, 312a, 416a, 422a, 504, 806a) and of a second eye (124b, 202b, 312b, 416b, 422b, 504, 806b) of at least one user (126) with respect to an optical combiner (108), wherein the optical combiner is arranged on an optical path of a light field display unit (106, 302, 400, 804) and on an optical path of a real-world light field (112) of a real-world environment (102);
generating an input (502) to be employed by the light field display unit for producing a synthetic light field (130), based on the relative location of the first eye and of the second eye of the at least one user with respect to the optical combiner; and
employing the input at the light field display unit to produce the synthetic light field presenting virtual content (128, 612), wherein the optical combiner is employed to reflect a first part and a second part of the synthetic light field towards the first eye and the second eye of the at least one user, respectively, whilst optically combining the first part and the second part of the synthetic light field with the real-world light field.

14. The method of claim 13, wherein the optical combiner (108) has a curved surface, and wherein the input (502) is generated further based on a curvature of the optical combiner.

15. The method of any of claims 13-14, wherein the light field display unit (106, 302, 400, 804) comprises a multiscopic optical element (116, 300, 408), and wherein the method further comprises controlling the multiscopic optical element, based on the relative location of the first eye (124a, 202a, 312a, 416a, 422a, 504, 806a) and of the second eye (124b, 202b, 312b, 416b, 422b, 504, 806b) of the at least one user (126) with respect to the optical combiner (108), to direct light produced by a first part of the input (502) and a second part of the input to generate the first part and the second part of the synthetic light field (130), respectively.

16. The method of any of claims 13-15, wherein the input (502) is in a form of a light field image, wherein a first part of the input and a second part of the input comprise a first set of pixels and a second set of pixels corresponding to the first eye (124a, 202a, 312a, 416a, 422a, 504, 806a) and the second eye (124b, 202b, 312b, 416b, 422b, 504, 806b) of the at least one user (126), respectively, wherein the step of generating the input comprises determining, within the light field image, a position of a given pixel (L) of the first set and a position of a given pixel (R) of the second set that correspond to a given synthetic three-dimensional (3D) point (802), based on an interpupillary distance (206, 808) between the first eye and the second eye of the at least one user and an optical depth at which the given synthetic 3D point is to be displayed.

17. The method of claim 16, further comprising:
processing images captured by at least one real-world-facing camera (122), to generate a depth image of the real-world environment (102); and
determining the optical depth at which the given synthetic 3D point (802) is to be displayed, based on the depth image.

18. The method of any of claims 13-17, wherein the at least one user (126) comprises a plurality of users, and wherein the method further comprises:
detecting when eyes (124a-b, 202a-b, 312a-b, 416a-b, 422a-b, 504, 806a-b) of at least one of the plurality of users are closed or the at least one of the plurality of users is not looking towards the optical combiner (108); and
when it is detected that the eyes of the at least one of the plurality of users are closed or the at least one of the plurality of users is not looking towards the optical combiner, skipping generating the input (502) according to a relative location of each eye of the at least one of the plurality of users with respect to the optical combiner, during generation of the input.

19. The method of claim 18, further comprising:
when it is detected that the eyes of the at least one of the plurality of users are closed or the at least one of the plurality of users is not looking towards the optical combiner (108),
identifying a given part of the input (502) that corresponds to a given eye (124a-b, 202a-b, 312a-b, 416a-b, 422a-b, 504, 806a-b) of the at least one of the plurality of users; and
utilising at least a subset of the given part of the input to produce additional light to supplement another part of the synthetic light field (130) corresponding to at least one other of the plurality of users.

20. The method of claim 18 or 19, further comprising:
when it is detected that the eyes (124a-b, 202a-b, 312a-b, 416a-b, 422a-b, 504, 806a-b) of the at least one of the plurality of users are closed,
predicting a duration for which the eyes of the at least one of the plurality of users are likely to remain closed; and
skipping generating the input (502) according to the relative location of each eye of the at least one of the plurality of users with respect to the optical combiner (108) for the predicted duration, during generation of the input.
